(19) Europäisches Patentamt
European Patent Office
Office européen des brevets

(11) **EP 4 750 001 A1**

(12) **EUROPEAN PATENT APPLICATION**

(43) Date of publication:
**27.05.2026 Bulletin 2026/22**

(21) Application number: **25217298.6**

(22) Date of filing: **20.11.2025**

(51) International Patent Classification (IPC):
**H04L 9/40** *(2022.01)* **H04W 12/02** *(2009.01)*

(52) Cooperative Patent Classification (CPC):
**H04L 63/04; H04W 12/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.11.2024 US 202418953808**

(71) Applicants:
• **Lemon Inc.**
**Grand Cayman, KY1-1205 (KY)**
• **Beijing Zitiao Network Technology Co., Ltd.**
**Beijing 100190 (CN)**

(72) Inventors:
• **LU, Donghang**
**Culver City, 90230 (US)**
• **JIANG, Bo**
**Culver City, 90230 (US)**
• **ZHANG, Wanrong**
**Culver City, 90230 (US)**
• **DU, Jian**
**Culver City, 90230 (US)**
• **SHARMA, Sagar**
**Culver City, 90230 (US)**
• **YAN, Qiang**
**Culver City, 90230 (US)**

(74) Representative: **Isarpatent**
**Patent- und Rechtsanwälte PartG mbB**
**Friedrichstraße 31**
**80801 München (DE)**

(54) **RANDOMIZED NOISE DATA USING SUB-DOMAINS**

(57) Methods, systems, and apparatus, including computer programs encoded on computer storage media, for determining whether to generate sub-domain noise. One of the methods includes, for a message for a downstream system, determining whether to generate noise data that has the same sub-domain as a true value, the true value from a domain that has a plurality of different sub-domains including the sub-domain; using a result of the determination whether to generate noise data that has the same sub-domain as the true value, generating the message for the downstream system; and transmitting, to the downstream system, the message.

FIG. 2

**Description**

BACKGROUND

Various systems can communicate over a network. For instance, a client device can send data to a server device, e.g., a cloud computing server. The data communicated over the network can be encrypted to increase data privacy, data security, or both.

SUMMARY

In general, one aspect of the subject matter described in this specification can be embodied in methods that include the actions of, for a message for a downstream system, determining whether to generate noise data that has the same sub-domain as a true value, the true value from a domain that has a plurality of different sub-domains including the sub-domain; using a result of the determination whether to generate noise data that has the same sub-domain as the true value, generating the message for the downstream system; and transmitting, to the downstream system, the message.

In general, one aspect of the subject matter described in this specification can be embodied in methods that include the actions of maintaining a plurality of messages that each include a value from a domain that includes a plurality of sub-domains; computing, using a first probability that indicates a likelihood that the value is a true value for a client device from which the value was received and a second probability that indicates a likelihood that the value is in the same sub-domain as the true value, a sub-domain frequency for a sub-domain from the plurality of sub-domains and that indicates a predicted frequency of an appearance of a true value belonging to the sub-domain for the plurality of messages; and processing data using the sub-domain frequency.

Other implementations of this aspect include corresponding computer systems, apparatus, computer program products, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination.

In some implementations, the method can include determining the true value that is from the sub-domain. Each of the values in the sub-domain of the domain can satisfy a similarity criterion for first other values in the sub-domain and does not satisfy the similarity criterion for second other values in other sub-domains of the domain.

In some implementations, the method can include maintaining, for each of the plurality of different sub-domains, data that identifies the values in the corresponding sub-domain. Generating the message can include: selecting, using the data that identifies the values in the different sub-domains, a value for the message; and generating the message using the selected value.

In some implementations, the method can include determining to generate noise data that has the same sub-domain as the true value. Generating the message can include, in response to determining to generate noise data that has the same sub-domain as the true value: selecting, from the sub-domain of the true value, a second, different value that is different than the true value; and generating the message using the second, different value that has the same sub-domain as the true value.

In some implementations, the method can include determining to not generate noise data that has the same sub-domain as the true value and to use the true value. Generating the message can use the true value, be responsive to determining to not generate noise data that has the same sub-domain as the true value and to use the true value, or both.

In some implementations, the method can include determining to not generate noise data that has the same sub-domain as the true value; and in response to determining to not generate noise data that has the same sub-domain as the true value, determining to generate noise data that has a different sub-domain than the true value. Generating the message can include, in response to determining to generate noise data that has a different sub-domain than the true value: selecting, from domain values in a domain not including the sub-domain of the true value, a second, different value; and generating the message using the second, different value that has the different sub-domain from the sub-domain of the true value.

In some implementations, the method can include determining whether to use the true value in the message. Determining whether to generate noise data that has the same sub-domain as the true value can be responsive to determining to not use the true value in the message.

In some implementations, determining whether to use the true value in the message can use a first probability. Determining whether to generate noise data that has the same sub-domain as the true value can use a second probability.

The second probability can have the same value as the first probability. The second probability can have a different value than the first probability.

In some implementations, a first probability indicates a likelihood that the message includes the true value; a second probability indicates a likelihood that the message includes a second value from the same sub-domain as the true value; a third probability indicates a likelihood that the message includes a third value from a different sub-domain from the sub-domain for the true value; and a sum of the first probability, the second probability, and the third probability is one.

In some implementations, the method can include computing a value frequency for a value from the domain that indicates a predicted frequency of the appearance of the value as a true value for the messages using the first probability, the second probability, and the sub-domain frequency; and processing data using the value frequency.

In some implementations, determining the value frequency can use the first probability, the second probability, a third probability that indicates a likelihood that the message includes a third value from a different sub-domain from the sub-domain for the true value, and the sub-domain frequency.

In some implementations, determining at least one of the value frequency or the sub-domain frequency can use a number of messages in the plurality of messages.

In some implementations, determining at least one of the value frequency or the sub-domain frequency can use a size of a sub-domain.

In some implementations, the sizes of each sub-domain in the plurality of sub-domains can be the same.

In some implementations, the method can include determining the sub-domain frequency can use the first probability, the second probability, and a third probability that indicates a likelihood that a message from the plurality of messages included a third value from a different sub-domain from the sub-domain for the true value.

The subject matter described in this specification can be implemented in various implementations and may result in one or more of the following advantages. In some implementations, the systems and methods described in this specification can increase a utility of data generated by determining whether to use, and sometimes using, noise data that has the same sub-domain as a true value, e.g., while increasing a likelihood of maintaining privacy guarantees for the data.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 depicts an example environment in which a client device uses sub-domain when generating messages.
FIG. 2 is a flow diagram of an example process for using a sub-domain probability.
FIG. 3 is a block diagram of a computing system that can be used in connection with computer-implemented methods described in this specification.

Like reference numbers and designations in the various drawings indicate like elements.

DETAILED DESCRIPTION

Some client devices can transmit data to a recipient processing system, e.g., a server or a cloud system, for analysis. Sending plain text data can have privacy concerns, security concerns, or both. For instance, a malicious actor can access the data before it is received by the recipient processing system. In some examples, the recipient processing system shouldn't be allowed access to data that is not anonymized, e.g., given user permissions.

To increase data security, increase data privacy, or both, a client device can perform one or more local differential privacy operations on data for transmission. This can include randomly determining whether to generate and transmit noise instead of transmitting true values, e.g., the data on which the client device is using differential privacy. The client device can use a privacy parameter $\varepsilon$ to determine how to generate noise, e.g., to compute a probability used to determine when to generate noise, how much noise to generate, or a combination of both. When $\varepsilon$ has a higher privacy level, e.g., has a smaller value, the $\varepsilon$ value can require that the client device has a higher likelihood of generating noise in the output data. Having a higher privacy level for the privacy parameter $\varepsilon$ can degrade the utility of query answers based on the output data, e.g., a processing system might be unable to accurately perform operations on the values from the messages when the values are impractical or even useless for analysis.

The way in which a system, e.g., a client device, uses the privacy parameter $\varepsilon$ to generate noise can depend on the type of noise generation process used. For General Randomized Response ("GRR"), the system can use the privacy parameter $\varepsilon$ to determine the probability whether a value for the message will be randomly permuting to another value. For example, the higher epsilon is, the more likely that the value message remains true value, e.g., the true query answer. In these instances, the system can pass a message through a noise injection process and, when determining to skip permuting the value to another value, the added noise can be zero. In some implementations, e.g., that use Binary Randomized Response ("BRR"), the system can always add noise, e.g., with a 100% probability. In these implementations, the system can use the privacy parameter ε to determine the distribution of the noise. For instance, with a larger ε value, the system can generate noise with less variance than the system would for a smaller ε value.

To more accurately distribute noise in the output, a client device can use sub-domains of a dataset. For instance, a dataset X can include some values that are more closely related to other values in the dataset. These values can indicate a likelihood that a person, e.g., a user of a client device, likes or dislikes content, an age of the person, a region in which the person lives, or other appropriate types of data. The use of these sub-domains can increase a utility in the noisy output data. For instance, a client device can first determine whether to add noise to output data. If so, the client device can then determine whether the noise should be noise from the same sub-domain or a different sub-domain from the dataset X. By using the sub-domain data, along with a privacy parameter ε, the client device can increase a likelihood of achieving a privacy guarantee, defined by the privacy parameter ε, while factoring in utility constraints defined by the sub-domains.

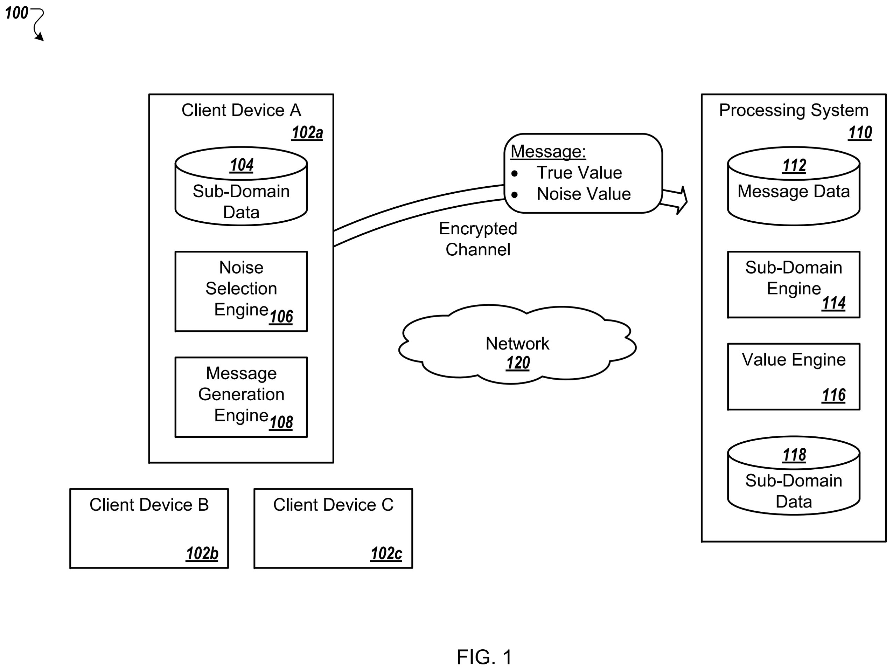

FIG. 1 depicts an example environment 100 in which a client device 102a-c uses sub-domain when generating messages. The sub-domain data can include probabilities that the message should include a value from the same sub-domain as a true value or a different sub-domain. To increase privacy for the client device 102a-c, e.g., while maintaining a utility that satisfies a utility criterion, the client device 102a-c can generate noise data that is different than the true value using one or more of the probabilities. The client device 102a-c can then provide a message that includes either a true value or a different value to a processing system 110 for data processing.

The client device A 102a includes a sub-domain database 104. Although specific examples are provided with reference to the client device A 102a, the client devices B-C 102b-c include similar components.

The sub-domain database 104 includes data that identifies multiple sub-domains for a domain output dataset X, one or more probabilities, or both. For instance, when the domain output dataset X includes content ratings for content, the sub-domains can indicate groups of content ratings. The content ratings can be integer values between 1 and 9. In these examples, the sub-domains can be values of 1-3, 4-6, and 7-9.

The sub-domains S can have any appropriate size. For instance, each of the sub-domains can have the same sub-domain size |S|. This can result in improved privacy, improved utility, or both, for the use of the sub-domains. The improved privacy, utility, or both, when the sub-domain sizes |S| are the same can be because the privacy, utility, or both, can be based on the size of the worst sub-domain. For example, the privacy can be based on the smallest sized sub-domain and the utility can be based on the largest sized sub-domain. As a result, by having sub-domains that are the same size, or approximately the same size when the domain cannot be divided into equally sized sub-domains, the environment 100 can generate messages that have improved utility, privacy, or both.

The sub-domain database 104 can include one or more probabilities. The probabilities can include a first probability $p$ that indicates a likelihood that a client device includes a true value in a message, e.g., a likelihood that the client device A 102a truthfully reports data to the processing system 110. The probabilities can include a second probability $p_S$ that indicates a likelihood that a client device includes a noise value with the same sub-domain as the true value in a message, e.g., a likelihood that data is perturbed to another label in the same sub-domain as the true value. In some instances, the probabilities can include a third probability $p_{\bar{S}}$ that a noise value from a different sub-domain than the sub-domain of the true value is included in a message, e.g., a likelihood that the label is perturbed to another label in another sub-domain from the sub-domain for the true value.

The client device A 102a can determine the probabilities in any appropriate manner. For instance, the client device A 102a can receive at least one of the probabilities from a processing system 110. In some examples, the client device A 102a can receive a privacy parameter ε and can compute at least one of the probabilities using the privacy parameter ε. The first probability p, the second probability $p_S$, and the third probability $p_{\bar{S}}$ can be computed using Equations (1), (2), and (3), respectively and below. In these Equations, let |X| represent the domain size of all appropriate inputs.

$$p = \frac{e^{\varepsilon}}{e^{\varepsilon} + (|S|-1)e^{\varepsilon - \varepsilon_0} + |X| - |S|} \tag{1}$$

$$p_S = \frac{e^{\varepsilon}}{e^{\varepsilon - \varepsilon_0} + (|S|-1)e^{\varepsilon - \varepsilon_0} + |X| - |S|} \tag{2}$$

$$p_{\bar{S}} = \frac{1}{e^{\varepsilon} + (|S|-1)e^{\varepsilon - \varepsilon_0} + |X| - |S|} \tag{3}$$

When the sub-domains have the same size |S|, Equations (1), (2), and (3) can be reduced to Equations (4), and (5), below. Equation (4) can be used to compute the first probability p, and the second probability $p_S$. Equation (5) can be used to compute the third probability $p_{\bar{S}}$.

$$p = p_S = \frac{e^\varepsilon}{|S|e^\varepsilon + |X| - |S|} \tag{4}$$

$$p_{\bar{S}} = \frac{1}{|S|e^\varepsilon + |X| - |S|} \tag{5}$$

A noise selection engine 106 can use one or more of the probabilities to determine whether to include a noise value in a message for the client device A 102a. For instance, the noise selection engine 106 can use the second probability to determine whether to include a noise value from the same sub-domain as the true value in a message. In response to determining to include a noise value from the same sub-domain in the message, the noise selection engine 106 can access the sub-domain database 104 to determine other values in the true value's sub-domain. The noise selection engine 106 can then select one of those values. For instance, when a true value of a content rating is five, and the value of five is in the sub-domain that includes values 4-6, the noise selection engine 106 can, e.g., randomly, select either four or six. The noise selection engine 106 can select another value in the same sub-domain as the true value because, from a data utility perspective for the processing system 110, perturbing an output item's label to another label within the same sub-domain, e.g., category, can be more accurate for the downstream processing than changing the label to a different label within a different sub-domain.

A message generation engine 108 can receive data from the noise selection engine 106 and generate a message for transmission to the processing system 110. For instance, the message generation engine 108 can receive noise data and include the noise data in the message. In some examples, the message generation engine 108 can receive data that indicates that the true value should be included in the message. The data can be the true value or other data that indicates that the true value should be included in the message.

The message generation engine 108 can generate the message in any appropriate manner. For instance, the message generation engine 108 can generate a message that includes an encrypted body.

In some implementations, the client device A 102a can determine whether to include other types of noise data in the message. For instance, the noise selection engine 106 can first determine whether to include noise data in the message. If not, the noise selection engine 106 can provide data to the message generation engine 108 indicating that the message generation engine 108 should generate a message that includes the true value.

If not, the noise selection engine 106 can determine a type of noise to include in the message. For example, the noise can be noise from the same sub-domain or a different sub-domain. The noise selection engine 106 can use one or both of the second probability $p_S$, or the third probability $p_{\bar{S}}$ to determine the type of noise to include in the message. In some instances, the noise selection engine 106 can use the second probability $p_S$ to determine the type of noise.

In response to determining the type of noise to include in the message, the noise selection engine 106 can select corresponding noise data from the domain X. For example, upon determining to select noise data from the same sub-domain as the true value, the noise selection engine 106 can access the sub-domain database 104 and select another value from the true value's sub-domain that is not the true value. Upon determining to select noise data from a different sub-domain than the true value's sub-domain, the noise selection engine can access the sub-domain database 104 and select another value from a different sub-domain. In the latter examples, the noise selection engine 106 need not determine a particular sub-domain from which to select the noise data but can, e.g., randomly, select the noise data from all other sub-domains. Given the above example with a true value of five, the noise selection engine 106 can randomly select noise data from {1, 2, 3, 7, 8, 9} which can include values from two sub-domains: a first sub-domain of {1, 2, 3} and a second sub-domain of {7, 8, 9}.

In some examples, the client device A 102a can use a single probability to determine whether to include a value from the true value's sub-domain or a different value from a different sub-domain. In these examples, the noise selection engine 106 can select a value from the true value's sub-domain in response to determining to include a value from the true value's sub-domain, e.g., a value from the sub-domain of {4, 5, 6}. In response to determining to not include a value from the true value's subdomain, the noise selection engine 106 can select a value from a different sub-domain for the domain X, e.g., as described above.

The client device A 102a can transmit the generated message to the processing system 110. The client device A 102a can use an encrypted channel, created with the processing system 110, to transmit the generated message. This transmission can cause the processing system 110 to process the message. For instance, the processing system 110 can receive multiple messages. Some of the messages can be received from different ones of the client devices A-C 102a-c. Some of the messages might be received from a single client device 102, e.g., the client device A 102a.

The processing system 110 receives the multiple messages from the client devices A-C 102a-c. The processing system 110 performs one or more operations on the data for the messages, e.g., one or more data analysis operations.

The processing system 110 can maintain data from the messages in a message database 112. This can enable the processing system 110 to store the data from the multiple messages for later analysis, e.g., as part of a big data process. By analyzing a larger quantity of messages, the data analysis can be more accurate.

The data from the messages can be the bodies of the messages, other appropriate data from the messages, or a combination of both. In some instances, the data from the messages does not include person, device, or both, identification information. For example, the data in the message database 112 can be anonymized. The data can be in any appropriate format. For instance, the data can be in an unencrypted format when the processing system 110 maintains sufficient security protocols to reduce a likelihood of a malicious actor accessing the message database. In these instances, the processing system 110 can decrypt the data when the message includes encrypted data. In some instances, the data in the message database 112 can be in an encrypted format.

The processing system 110 can compute frequency data for the messages. For instance, the processing system 110 can compute a sub-domain frequency $\hat{F}_S$ for at least one of the sub-domains of the domain X, a value frequency $\hat{F}_x$ for at least one value from the domain X, or a combination of both. The sub-domain frequency $\hat{F}_S$ can denote the true frequency of the appearance of any value that belongs to the subdomain S. The processing system 110, e.g., a sub-domain engine 114, can compute the sub-domain frequency $\hat{F}_S$ using Equation (6), below. The value frequency $\hat{F}_x$ can be the predicted true frequency that a value x would have been a true value in the messages, e.g., if not for the noise included in some of the messages. The processing system 110, e.g., a value engine 116, can compute the value frequency $\hat{F}_x$ using Equation (7), below. In Equations (6) and (7), N indicates the number of messages being processed.

$$\hat{F}_S = \frac{\sum_{i=1}^{N} \mathbb{1}_{\{x_i \in S\}} - N|S|p_{\overline{S}}}{p + (|S|-1)p_S - |S|p_{\overline{S}}} \tag{6}$$

$$\hat{F}_x = \frac{\sum_{i=1}^{N} \mathbb{1}_{\{x_i = x\}} - \hat{F}_S(p_S - p_{\overline{S}}) - Np_{\overline{S}}}{p - p_S} \tag{7}$$

In some implementations, the processing system 110 can compute multiple frequencies. For instance, the processing system 110 can compute a sub-domain frequency for each sub-domain in the domain X of output values. In some examples, after generating a sub-domain frequency for the sub-domain S, the processing system 110 can compute at least some, e.g., all, value frequencies for the values x in the sub-domain S.

The processing system 110 can process data using one or more of the frequencies. For instance, the processing system 110 can perform data analytics using one or more of the frequencies, provide one or more of the frequencies to another system, perform another appropriate action, or any combination of these.

The processing system 110 can maintain a sub-domain database 118. The sub-domain database 118 can include data similar to the data maintained in the client device's 102 sub-domain database 104. For instance, the sub-domain database 118 can include one or more probabilities, data indicating the values in the domain X, data indicating the various sub-domains S of the domain X, one or more of the frequencies, or any appropriate combination of these.

The noise selection engine 106 can use any appropriate process to generate the noise, e.g., using sub-domains. For instance, the noise selection engine 106 can use general randomized response (GRR), binary randomized response (BRR), or another appropriate process.

The processing system 110 is an example of a system implemented as computer programs on one or more computers in one or more locations, in which the systems, components, and techniques described in this specification are implemented. The client devices A-C 102a-c can include personal computers, mobile communication devices, and other devices that can send and receive data over a network 120. The network 120, such as a local area network ("LAN"), wide area network ("WAN"), the Internet, or a combination thereof, connects the client devices A-C 102a-c, and the processing system 110. The processing system 110 can use a single computer or multiple computers operating in conjunction with one another, including, for example, a set of remote computers deployed as a cloud computing service.

The client devices A-C 102a-c and the processing system 110 can include several different functional components, including the noise selection engine 106, the message generation engine 108, the sub-domain engine 114, and the value engine 116. Any one or more of the components can include one or more data processing apparatuses, can be implemented in code, or a combination of both. For instance, each of the components can include one or more data processors and instructions that cause the one or more data processors to perform the operations discussed in this specification.

The various functional components of the processing system 110 can be installed on one or more computers as separate functional components or as different modules of a same functional component. For example, the components of the processing system 110 can be implemented as computer programs installed on one or more computers in one or more locations that are coupled to each through a network. In cloud-based systems for example, these components can be implemented by individual computing nodes of a distributed computing system.

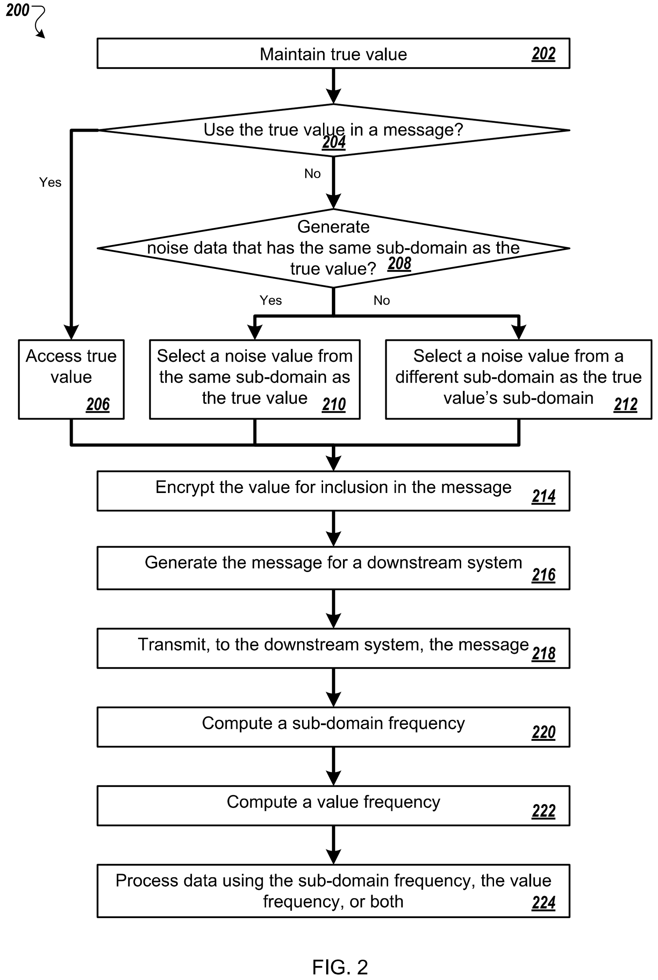

FIG. 2 is a flow diagram of an example process 200 for using a sub-domain probability. For example, various operations in the process 200 can be used by the client device 102 or the processing system 110 from the environment 100.

A client device maintains true value (202). The client device can generate the true value, receive the true value as input, or determine the true value in any other appropriate manner. The client device can store, and then maintain, the true value in a database.

The true value can be a value from a sub-domain in a domain. Each of the values in the sub-domain of the domain can satisfy a similarity criterion for other values in the sub-domain. Each of the values in the sub-domain might not satisfy the similarity criterion for other values in other sub-domains of the domain.

The client device determines whether to use the true value in a message (204). For instance, the client device can use a first probability $p$ to determine whether to include the true value in the message.

The client device accesses true value (206). For example, in response to determining to use the true value in the message, the client device can access the database and retrieve the true value from the database.

The client device determines whether to generate noise data that has the same sub-domain as the true value (208). For instance, in response to determining to not use the true value in the message, the client device can determine a type of noise data to include in the message. The types of noise data can include noise data from the same sub-domain as the true value or from a different sub-domain. The client device can use a second probability $p_S$ to determine whether to generate noise data that has the same sub-domain as the true value. The second probability $p_S$ can be the same probability as the first probability $p$.

The client device selects a noise value from the same sub-domain as the true value (210). For example, in response to determining to generate noise data that has the same sub-domain as the true value, the client device selects a noise value from the same sub-domain as the true value.

The client device selects a noise value from a different sub-domain as the true value's sub-domain (212). For instance, in response to determining to generate noise data that has a different sub-domain than the true value, the client device selects the noise value from a different sub-domain. This determination does not necessarily include a determination of a particular sub-domain other than the true value's sub-domain from which to select the noise value. Instead, the client device can randomly select a noise value from the domain X other than any values that are in the true value's sub-domain.

The client device encrypts the value for inclusion in the message (214). For example, the client device can optionally encrypt the value for inclusion in the message. The value can be the true value or the noise value depending on which operations 204 through 212 were performed.

The client device generates the message for a downstream system (216). For instance, the client device can generate the message using the value, e.g., the true value or the noise value.

The client device transmits, to the downstream system, the message (218). The client device can use any appropriate protocol to transmit the message. The client device can use an encrypted channel to transmit the message.

A downstream system receives the message from the client device. For example, the downstream system, e.g., the processing system from the environment 100, uses a corresponding protocol to receive the message transmitted by the client device.

The downstream system computes a sub-domain frequency (220). For instance, the downstream system can compute the sub-domain frequency using one or more of a first probability that indicates a likelihood that the value is a true value for the client device, a second probability that indicates a likelihood that the value is in the same sub-domain as the true value, a third probability that indicates a likelihood that the message includes a third value from a different sub-domain from the sub-domain for the true value, a number of messages in the plurality of messages, or a size of a sub-domain. The downstream system can compute the sub-domain frequency using Equation (6), above.

The downstream system computes a value frequency (222). The downstream system can compute the value frequency using at least the sub-domain frequency and optionally one or more of the first probability, the second probability, the third probability, or the number of messages in the plurality of messages. In some examples, the downstream system can use Equation (7), above, to compute the value frequency.

The downstream system processes data using the sub-domain frequency, the value frequency, or both (224). The processing can be any appropriate type of processing. In some instances, the downstream system can provide at least some of the frequency data to another system for processing.

The order of operations in the process 200 described above is illustrative only, and the use of the sub-domain probability can be performed in different orders. For example, the process 200 can include operation 208 before operation 204. In some instances, the process 200 can include operation 206 before operation 204.

In some implementations, the process 200 can include additional operations, fewer operations, or some of the operations can be divided into multiple operations. For example, the process 200 can include only operations 220 to 224. In some instances, the process 200 can include operations 202, 208, 210, 216, and 218. In some examples, the process 200 can include operations 202, 204, 208, 210 or 212, 216, and 218. The process 200 can include operations 204, 206, 216, and 218.

Although the examples described in this specification refer to a true value and noise value, similar examples apply to any appropriate type of data.

For situations in which the systems discussed here collect personal information about people, or may make use of personal information, the people may be provided with an opportunity to control whether programs or features collect personal information, or to control whether and/or how the system operates. In addition, as described above, data is anonymized in one or more ways before it is stored or used, so that personally identifiable information is removed. For example, the client devices can randomly add noise to messages, e.g., instead of output values, to reduce a likelihood of personally identifiable information being inferred from the messages.

In this specification, the term "database" is used broadly to refer to any collection of data: the data does not need to be structured in any particular way, or structured at all, and it can be stored on storage devices in one or more locations. A database can be implemented on any appropriate type of memory.

In this specification the term "engine" is used broadly to refer to a software-based system, subsystem, or process that is programmed to perform one or more specific functions. Generally, an engine will be implemented as one or more software modules or components, installed on one or more computers in one or more locations. In some instances, one or more computers will be dedicated to a particular engine. In some instances, multiple engines can be installed and running on the same computer or computers.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform those operations or actions. That one or more computer programs is configured to perform particular operations or actions means that the one or more programs include instructions that, when executed by data processing apparatus, cause the apparatus to perform those operations or actions. That special-purpose logic circuitry is configured to perform particular operations or actions means that the circuitry has electronic logic that performs those operations or actions.

A number of implementations have been described. Nevertheless, it will be understood that various modifications can be made without departing from the spirit and scope of the disclosure. For example, various forms of the flows shown above can be used, with operations re-ordered, added, or removed.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory program carrier for execution by, or to control the operation of, a data processing apparatus. Alternatively or in addition, the program instructions can be encoded on an artificially-generated propagated signal, e.g., a machine-generated electrical, optical, or electromagnetic signal, that is generated to encode information for transmission to a suitable receiver apparatus for execution by a data processing apparatus. One or more computer storage media can include a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can be or include special purpose logic circuitry, e.g., a field programmable gate array ("FPGA") or an application-specific integrated circuit ("ASIC"). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can be performed by, and apparatus can also be implemented as, special purpose logic circuitry, e.g., a field programmable gate array ("FPGA") or an application-specific integrated circuit ("ASIC").

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. A computer can be embedded in another device, e.g., a mobile telephone, a smart phone, a headset, a personal digital assistant ("PDA"), a mobile audio or video player, a game console, a Global Positioning System ("GPS") receiver, or a portable storage device, e.g., a universal serial bus ("USB") flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a liquid crystal display ("LCD"), an organic light emitting diode ("OLED") or other monitor, for displaying information to the user and a keyboard and a pointing device, e.g., a mouse or a trackball or a touchscreen, by which the user can provide input to the computer. Other kinds of devices can be used to provide for interaction with a user as well. For example, feedback provided to the user can be any form of sensory feedback, e.g., visual feedback, auditory feedback, or tactile feedback; and input from the user can be received in any form, including acoustic, speech, or tactile input. In some examples, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an Hypertext Markup Language ("HTML") page, to a user device, e.g., for purposes of displaying data to and receiving user input from a user device, which acts as a client. Data generated at the user device, e.g., a result of user interaction with the user device, can be received from the user device at the server.

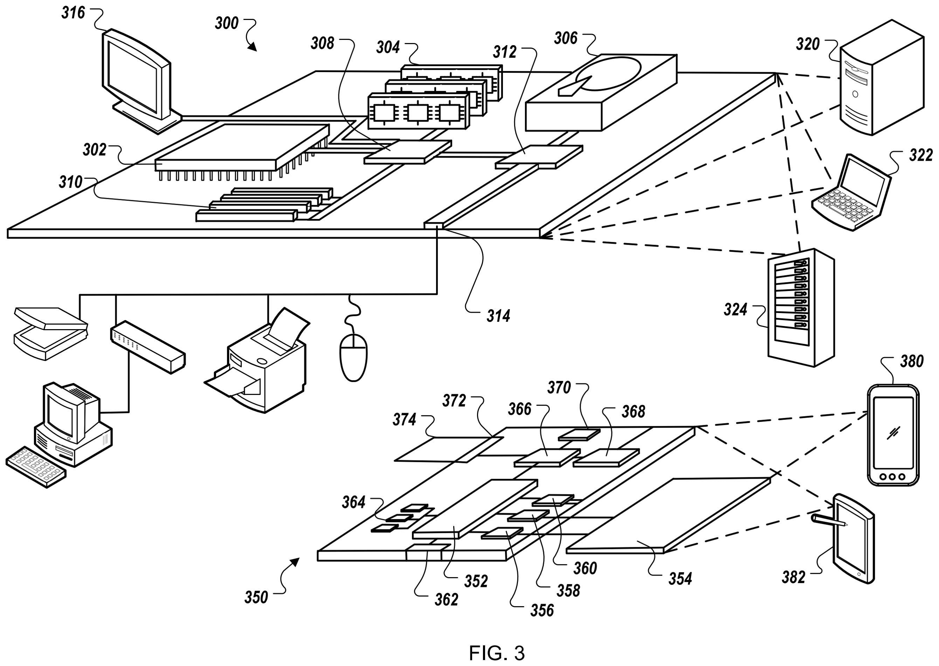

FIG. 3 is a block diagram of computing devices 300, 350 that may be used to implement the systems and methods described in this specification, as either a client or as a server or plurality of servers. Computing device 300 is intended to represent various forms of digital computers, such as laptops, desktops, workstations, personal digital assistants, servers, blade servers, mainframes, and other appropriate computers. Computing device 350 is intended to represent various forms of mobile devices, such as personal digital assistants, cellular telephones, smartphones, smartwatches, head-worn devices, and other similar computing devices. The components shown here, their connections and relationships, and their functions, are meant to be exemplary only, and are not meant to limit implementations described and/or claimed in this specification.

Computing device 300 includes a processor 302, memory 304, a storage device 306, a high-speed interface 308 connecting to memory 304 and high-speed expansion ports 310, and a low-speed interface 312 connecting to low-speed bus 314 and storage device 306. Each of the components 302, 304, 306, 308, 310, and 312, are interconnected using various busses, and may be mounted on a common motherboard or in other manners as appropriate. The processor 302 can process instructions for execution within the computing device 300, including instructions stored in the memory 304 or on the storage device 306 to display graphical information for a GUI on an external input/output device, such as display 316 coupled to high-speed interface 308. In other implementations, multiple processors and/or multiple buses may be used, as appropriate, along with multiple memories and types of memory. Also, multiple computing devices 300 may be connected, with each device providing portions of the necessary operations (e.g., as a server bank, a group of blade servers, or a multi-processor system).

The memory 304 stores information within the computing device 300. In one implementation, the memory 304 is a computer-readable medium. In one implementation, the memory 304 is a volatile memory unit or units. In another implementation, the memory 304 is a non-volatile memory unit or units.

The storage device 306 is capable of providing mass storage for the computing device 300. In one implementation, the storage device 306 is a computer-readable medium. In various different implementations, the storage device 306 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 304, the storage device 306, or memory on processor 302.

The high-speed controller 308 manages bandwidth-intensive operations for the computing device 300, while the low-speed controller 312 manages lower bandwidth-intensive operations. Such allocation of duties is exemplary only. In one implementation, the high-speed controller 308 is coupled to memory 304, display 316 (e.g., through a graphics processor or accelerator), and to high-speed expansion ports 310, which may accept various expansion cards (not shown). In the implementation, low-speed controller 312 is coupled to storage device 306 and low-speed expansion port 314. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 300 may be implemented in a number of different forms, as shown in the figure. For example, it may be implemented as a standard server 320, or multiple times in a group of such servers. It may also be implemented as part of a rack server system 324. In addition, it may be implemented in a personal computer such as a laptop computer 322. Alternatively, components from computing device 300 may be combined with other components in a mobile device (not shown), such as device 350. Each of such devices may contain one or more of computing device 300, 350, and an entire system may be made up of multiple computing devices 300, 350 communicating with each other.

Computing device 350 includes a processor 352, memory 364, an input/output device such as a display 354, a communication interface 366, and a transceiver 368, among other components. The device 350 may also be provided with a storage device, such as a microdrive or other device, to provide additional storage. Each of the components 350, 352, 364, 354, 366, and 368, are interconnected using various buses, and several of the components may be mounted on a common motherboard or in other manners as appropriate.

The processor 352 can process instructions for execution within the computing device 350, including instructions stored in the memory 364. The processor may also include separate analog and digital processors. The processor may provide, for example, for coordination of the other components of the device 350, such as control of user interfaces, applications run by device 350, and wireless communication by device 350.

Processor 352 may communicate with a user through control interface 358 and display interface 356 coupled to a display 354. The display 354 may be, for example, a TFT LCD display or an OLED display, or other appropriate display technology. The display interface 356 may comprise appropriate circuitry for driving the display 354 to present graphical and other information to a user. The control interface 358 may receive commands from a user and convert them for submission to the processor 352. In addition, an external interface 362 may be provided in communication with processor 352, so as to enable near area communication of device 350 with other devices. External interface 362 may provide, for example, for wired communication (e.g., via a docking procedure) or for wireless communication (e.g., via Bluetooth or other such technologies).

The memory 364 stores information within the computing device 350. In one implementation, the memory 364 is a computer-readable medium. In one implementation, the memory 364 is a volatile memory unit or units. In another implementation, the memory 364 is a non-volatile memory unit or units. Expansion memory 374 may also be provided and connected to device 350 through expansion interface 372, which may include, for example, a SIMM card interface. Such expansion memory 374 may provide extra storage space for device 350, or may also store applications or other information for device 350. Specifically, expansion memory 374 may include instructions to carry out or supplement the processes described above, and may include secure information also. Thus, for example, expansion memory 374 may be provided as a security module for device 350, and may be programmed with instructions that permit secure use of device 350. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 364, expansion memory 374, or memory on processor 352.

Device 350 may communicate wirelessly through communication interface 366, which may include digital signal processing circuitry where necessary. Communication interface 366 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 368. In addition, short-range communication may occur, such as using a Bluetooth, WiFi, or other such transceiver (not shown). In addition, GPS receiver module 370 may provide additional wireless data to device 350, which may be used as appropriate by applications running on device 350.

Device 350 may also communicate audibly using audio codec 360, which may receive spoken information from a user and convert it to usable digital information. Audio codec 360 may likewise generate audible sound for a user, such as through a speaker, e.g., in a handset of device 350. Such sound may include sound from voice telephone calls, may include recorded sound (e.g., voice messages, music files, etc.) and may also include sound generated by applications operating on device 350.

The computing device 350 may be implemented in a number of different forms, as shown in the figure. For example, it may be implemented as a cellular telephone 380, e.g., a smartphone. In some instances, the computing device 350 may be implemented as a tablet 382. Other types of the computing device 350 can include an extended reality device, e.g., an augmented reality device or a virtual reality device, a personal digital assistant, or another similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

In some implementations, when a device or system transmits data to another device or system, the transmission of the data, such as a message, can cause the other device or system to perform one or more actions. For instance, transmission of a message that includes an instruction to a camera can cause the camera to capture one or more images, transmit one or more images to the device or system, or a combination of both.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some instances be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures, such as spreadsheets, relational databases, or structured files, may be used.

Particular implementations of the invention have been described. Other implementations are within the scope of the following claims. For example, the operations recited in the claims, described in the specification, or depicted in the figures can be performed in a different order and still achieve desirable results. In some implementations, multitasking and parallel processing may be advantageous.

**Claims**

1. A computer-implemented method comprising:

   for a message for a downstream system, determining whether to generate noise data that has the same sub-domain as a true value, the true value from a domain that has a plurality of different sub-domains including the sub-domain;
   using a result of the determination whether to generate noise data that has the same sub-domain as the true value, generating the message for the downstream system; and
transmitting, to the downstream system, the message.

2. The computer-implemented method of claim 1, comprising:
determining the true value that is from the sub-domain, wherein each of the values in the sub-domain of the domain satisfies a similarity criterion for first other values in the sub-domain and does not satisfy the similarity criterion for second other values in other sub-domains of the domain.

3. The computer-implemented method of claim 2, comprising:
maintaining, for each of the plurality of different sub-domains, data that identifies the values in the corresponding sub-domain, wherein:
generating the message comprises:

   selecting, using the data that identifies the values in the different sub-domains, a value for the message; and
   generating the message using the selected value.

4. The computer-implemented method of claim 1, comprising:
determining to generate noise data that has the same sub-domain as the true value, wherein:
generating the message comprises, in response to determining to generate noise data that has the same sub-domain as the true value:

   selecting, from the sub-domain of the true value, a second, different value that is different than the true value; and
   generating the message using the second, different value that has the same sub-domain as the true value.

5. The computer-implemented method of claim 1, comprising:
determining to not generate noise data that has the same sub-domain as the true value and to use the true value, wherein:
generating the message uses the true value and is responsive to determining to not generate noise data that has the same sub-domain as the true value and to use the true value.

6. The computer-implemented method of claim 1, comprising:

   determining to not generate noise data that has the same sub-domain as the true value; and
   in response to determining to not generate noise data that has the same sub-domain as the true value, determining to generate noise data that has a different sub-domain than the true value, wherein:
   generating the message comprises, in response to determining to generate noise data that has a different sub-domain than the true value:

      selecting, from domain values in a domain not including the sub-domain of the true value, a second, different value; and
      generating the message using the second, different value that has the different sub-domain from the sub-domain of the true value.

7. The computer-implemented method of claim 1, comprising:
determining whether to use the true value in the message, wherein determining whether to generate noise data that has the same sub-domain as the true value is responsive to determining to not use the true value in the message.

8. The computer-implemented method of claim 7, wherein:

   determining whether to use the true value in the message uses a first probability; and
   determining whether to generate noise data that has the same sub-domain as the true value uses a second probability that has the same value as the first probability.

9. The computer-implemented method of claim 7, wherein:

   determining whether to use the true value in the message uses a first probability; and
   determining whether to generate noise data that has the same sub-domain as the true value uses a second probability that has a different value as the first probability.

10. The computer-implemented method of claim 7, wherein:

a first probability indicates a likelihood that the message includes the true value;
a second probability indicates a likelihood that the message includes a second value from the same sub-domain as the true value;
a third probability indicates a likelihood that the message includes a third value from a different sub-domain from the sub-domain for the true value; and
a sum of the first probability, the second probability, and the third probability is one.

11. A system comprising one or more computers and one or more storage devices on which are stored instructions that are operable, when executed by the one or more computers, to cause the one or more computers to perform operations comprising:

maintaining a plurality of messages that each include a value from a domain that includes a plurality of sub-domains;
computing, using a first probability that indicates a likelihood that the value is a true value for a client device from which the value was received and a second probability that indicates a likelihood that the value is in the same sub-domain as the true value, a sub-domain frequency for a sub-domain from the plurality of sub-domains and that indicates a predicted frequency of an appearance of a true value belonging to the sub-domain for the plurality of messages; and
processing data using the sub-domain frequency.

12. The system of claim 11, the operations comprising:

computing a value frequency for a value from the domain that indicates a predicted frequency of the appearance of the value as a true value for the messages using the first probability, the second probability, and the sub-domain frequency; and
processing data using the value frequency.

13. The system of claim 12, wherein determining the value frequency uses the first probability, the second probability, a third probability that indicates a likelihood that the message includes a third value from a different sub-domain from the sub-domain for the true value, and the sub-domain frequency; or

wherein determining at least one of the value frequency or the sub-domain frequency uses a number of messages in the plurality of messages; or
wherein determining at least one of the value frequency or the sub-domain frequency uses a size of a sub-domain, preferably, the sizes of each sub-domain in the plurality of sub-domains are the same.

14. The system of claim 11, wherein determining the sub-domain frequency uses the first probability, the second probability, and a third probability that indicates a likelihood that a message from the plurality of messages included a third value from a different sub-domain from the sub-domain for the true value.

15. One or more computer storage media encoded with instructions that, when executed by one or more computers, cause the one or more computers to perform the computer-implemented method of any of claims 1 to 10.

FIG. 1

*200*

Maintain true value                                  *202*

Use the true value in a message?  *204*

Yes                                                  No

Generate
noise data that has the same sub-domain as the
true value?  *208*

Yes                          No

| Access true value  *206* | Select a noise value from the same sub-domain as the true value  *210* | Select a noise value from a different sub-domain as the true value's sub-domain  *212* |

Encrypt the value for inclusion in the message  *214*

Generate the message for a downstream system  *216*

Transmit, to the downstream system, the message  *218*

Compute a sub-domain frequency  *220*

Compute a value frequency  *222*

Process data using the sub-domain frequency, the value frequency, or both  *224*

FIG. 2

FIG. 3

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAN WANG ET AL: "L-SRR: Local Differential Privacy for Location-Based Services with Staircase Randomized Response", ARXIV.ORG CORNELL UNIVERSITY LIBRARY, 201 OLIN LIBRARY CORNELL UNIVERSITY ITHACA, NY 14853, 29 September 2022 (2022-09-29), XP091330556, * abstract * * chapters 1, 2, 3.1-3.5, 8 * * figures 1-5 * * algorithms 1-2 * * equations (2)-(4), (8) * ----- | 1-15 | INV. H04L9/40 H04W12/02 |

| | |
|---|---|
| | TECHNICAL FIELDS SEARCHED (IPC) |
| | H04L H04W |

The present search report has been drawn up for all claims

| Place of search | Date of completion of the search | Examiner |
|---|---|---|
| The Hague | 13 March 2026 | Dujardin, Corinne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)